# EUROPEAN PATENT SPECIFICATION

(11) **EP 3 464 917 B1**
(45) Date of publication and mention of the grant of the patent: **05.05.2021**
(21) Application number: 17724559.4
(22) Date of filing: 19.05.2017
(51) Int. Cl.: F16C 17/04, F16C 17/10, F16C 9/02, F16C 43/02

(54) **SLIDING ELEMENT COMPONENT COMPRISING AT LEAST ONE RECESS FOR RECEIVING AN ADHESIVE**
GLEITELEMENTKOMPONENTE MIT MINDESTENS EINER VERTIEFUNG ZUR AUFNAHME EINES KLEBSTOFFS
COMPOSANT D'ÉLÉMENT COULISSANT COMPORTANT AU MOINS UN ÉVIDEMENT DESTINÉ À RECEVOIR UN ADHÉSIF

(30) Priority: 03.06.2016 GB 201609775
(43) Date of publication of application: 10.04.2019
(73) Proprietor: Mahle International GmbH, 70376 Stuttgart (DE); Mahle Engine Systems UK Limited, Rugby, Warwickshire CV23 0WE (GB)
(72) Inventor: FORDER, Jon, Rugby Warwickshire CV21 2QT (GB); HARRISON, Paul, Rugby Warwickshire CV23 0WQ (GB); THYER, James, Nuneaton Warwickshire CV10 7ST (GB)
(74) Representative: BRP Renaud & Partner mbB Rechtsanwälte Patentanwälte Steuerberater
(86) International application number: PCT/EP2017/062135
(87) International publication number: WO 2017/207303

(56) References cited:
- EP-A1- 3 104 031
- DE-A1- 3 730 165
- DE-A1-102013 203 565
- JP-A- 2015 200 380
- US-A1- 2005 135 716

## Description

### FIELD OF THE INVENTION

This invention relates to a sliding element component comprising at least one recess for receiving an adhesive. The invention also relates to a thrust washer, a flanged bearing assembly comprising the sliding element component, an engine comprising the sliding element component and a method of assembling a flanged bearing assembly comprising the sliding element component.

The sliding element component is particularly suitable for use in bearing against a rotatable component, for example a rotatable shaft.

### BACKGROUND TO THE PRESENT INVENTION

Sliding element components according to preferred embodiments of the present invention are particularly suitable for use as flanged half-bearings, flanged bearings and flanged bushes for use in automotive applications, for example in automotive engines (e.g. on crankshafts), transmissions, pumps and compressor systems.

In internal combustion engines, the bearing assemblies typically each comprise a pair of half-bearings retaining a crankshaft that is rotatable about an axis. For crankshaft journal bearing assemblies, at least one half-bearing may be a flanged half-bearing that comprises a hollow, generally semi-cylindrical, bearing shell provided with a generally semi-annular thrust washer extending outwardly (radially) at each axial end.

OEMs in the automotive sector, including engine and subassembly manufacturers, typically specify that an assembled flanged bearing is supplied as part of the main bearing set. This allows for ease of installation and keeps the thrust washer in place during the life of the engine. The assembled flanged bearing is expected to be rigid enough to cope with transportation and handling by operators and/or robots and to be flexible enough to accommodate machining tolerances in the engine and to permit installation, e.g. into an engine block.

Previous efforts to develop flanged bearings have focussed on providing them with means for supporting torque loads of the engine during use without the thrust washers becoming detached from and rotating relative to the bearing shell.

In some known flanged bearings, a single-piece construction of the bearing shell and thrust washers is used. In other known flanged bearings, the bearing shell and the thrust washer are loosely mechanically engaged with clip-like features. In a further type of flanged bearings the thrust washers are permanently assembled onto the bearing shell by deformation of corresponding engagement features.

Known clip-like features for loosely mechanically engaging a thrust washer around the outer surface of a bearing shell, at an axial end, have a generally semi-annular panel with a pair of hooking lugs (tabs) projecting inwardly from the semi-circular inner edge. The hooking lugs hook into corresponding openings in the bearing shell, in use, when the thrust washer is connected around the outer surface at an axial end of the bearing shell. The inwardly projecting hooking lugs are located to either side of the crown of the bearing, towards the joint faces, and are shaped to enable the thrust washer to be assembled onto the bearing shell when the bearing shell is resiliently or elastically deformed by pinching together the joint faces (circumferential end faces). The arrangement by which the hooking lugs engage with the openings prevents separation once the bearing shell has returned to the relaxed position, and also prevents separation when the bearing shell has been slightly pinched together through being held in an interference fit with a housing, within the full bearing assembly. The hooking lugs typically have a uniform thickness and are machined to be thinner than the main semi-annular panel of the thrust washer, to enable the use of (axially) narrow openings in the bearing shell. One or more stabilisation lugs may be provided intermediate the hooking lugs, projecting inwardly from the inner edge of the semi-annular main panel, to reinforce the connection between the thrust washer and bearing shell, to prevent wear leading to substantial relative rotation of the thrust washer and bearing shell.

The prior art includes patent numbers US4533261, and EP2233759 which provide flanged bearings, in which thrust washers are loosely mechanically engaged with bearing shells using clip-like features comprising thin hooking lugs of uniform thickness receivable within openings in a corresponding bearing shell.

The prior art also includes PCT publication number WO2013/068106 which provides a flanged bearing (330) comprising at least one substantially semi-annular thrust washer (100A, 100B) with an internal periphery having lateral lugs (104A, 104B) and an intermediary stabilisation lug (106) projecting from the internal periphery (108) of the thrust washer, and a semi-cylindrical half journal bearing shell (220) having lateral holes or indentations (226A, 226B) and an intermediary stabilisation indentation (228) in an axial end face (224A, 224B) of the bearing shell and are respectively connected to the lateral lugs and the stabilisation lug of the thrust washer, wherein the stabilisation lug (106) has rotational stabilisation edges (114) that project substantially perpendicularly from the inner periphery (108) of the thrust washer, and the stabilisation indentations (228) are configured for axial relative movement of stabilisation lug; and an engine comprising at least one such flanged bearing (330).

The prior art also includes PCT publication number WO2015/007826 which provides a thrust washer (100) for a flanged bearing, the thrust washer comprising: a substantially semi-annular panel (102) having an inner edge (108) and outer edge; and hooking lugs (110) projecting inwardly from the inner edge of the panel, wherein the hooking lugs have latching edges (118) that are configured to engage within corresponding openings in a bearing shell received by the thrust washer and to prevent disconnection of the thrust washer and bearing shell without deformation of the bearing shell, each hooking lug has a hooking lug inner portion (104A) proximate, around the inner edge of the panel, to the central part of the thrust washer for engaging against edges of the openings in the bearing shell and a hooking lug outer portion (104B) remote, around the inner edge of the panel, from the central part of the thrust washer, and the hooking lug inner portion is thinner than the hooking lug outer portion DE 37 30 165 A1 discloses the features of the preamble of claim 1. EP 3 104 031 A1 is state of the art according to Article 54(3) EPC.

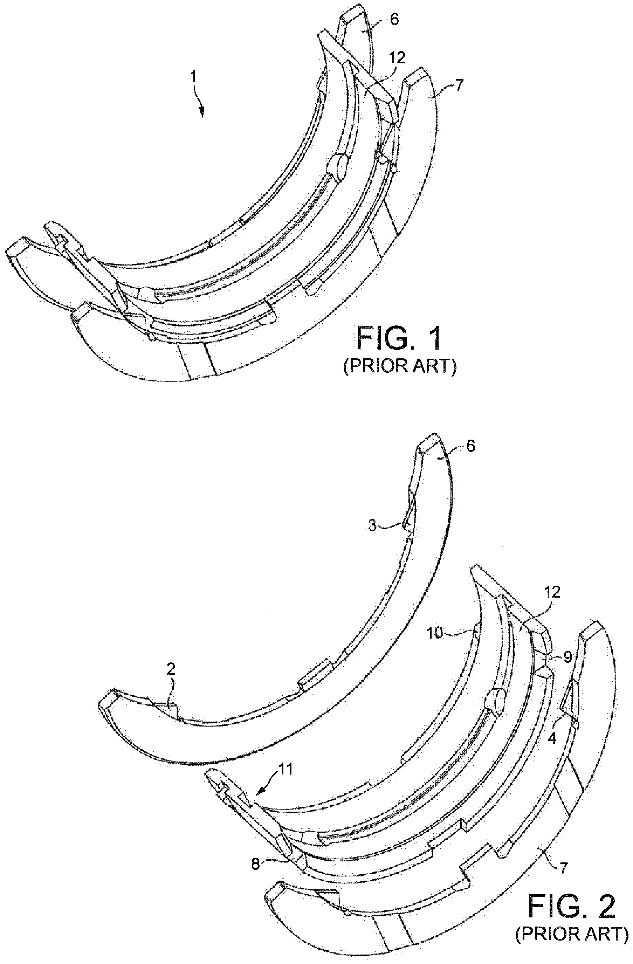

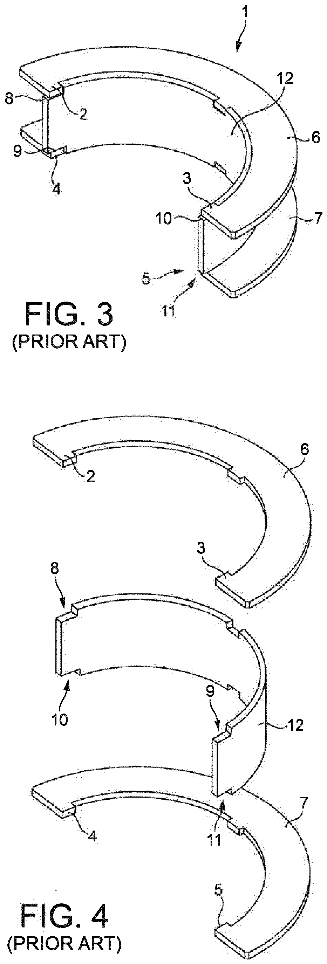

The inventors have appreciated that there may be a number of limitations or disadvantages associated with known types of flanged bearings such as those described in the aforementioned prior art references and illustrated in Figures 1 to 4. These may comprise one or more of the following, among others:-
i. as shown in Figures 1 to 4, the prior art flanged bearings 1 use clips or 'tangs' 2,3,4,5 proximate the ends of the thrust washers 6,7 for engagement with corresponding notches 8,9,10,11 proximate the ends of the bearing shell 12. These clips or tangs are typically the only thing which hold the thrust washers in engagement with the bearing shell to form a self-supporting assembly. It may be fiddly to engage the clips or tangs with the corresponding notches which may necessitate manual handling of the thrust washers and the bearing shell;
ii. the clips or tangs of the prior art devices may require the ends of the bearing shell to be pinched to permit engagement of clips or tangs with corresponding notches;
iii. the clips or tangs of the prior art devices may lead to an increase in the manufacturing lead time;
iv. the clips or tangs of the prior art devices may lead to scrappage of a higher proportion of assembled flanged bearings than may be desirable due the thrust washers not being correctly fitted to the bearing shell or becoming detached from the bearing shell during transportation and handling;
v. the clips or tangs and the corresponding notches of the prior art being the only thing that forms a self-supporting flanged bearing necessitates the use of close tolerances between the clips or tangs and the corresponding notches. This may require the use of certain manufacturing processes and effective quality control;
vi. the need for close tolerances may also necessitate the use of post-processing operations, such as deburring or the removal of ledges on the clips or tangs and/or the corresponding notches which may result from the initial forming operation, or the machining of one or more chamfers to facilitate engagement of the clips or tangs and the corresponding notches. This has the potential to introduce debris (e.g. swarf or metal particulate) which may have an adverse impact on the performance of the bearing shell and/or the thrust washers;
vii. the need for additional post-processing operations may add to the cost of manufacture and may have an impact on the manufacturing lead time. It may also contribute to a higher proportion of the thrust washers and/or bearing shells being scrapped than may be desirable due to errors in the post-processing operations;
viii. the clips or tangs of the prior art devices, may lead to the resulting flanged bearing having greater stiffness, or lower flexibility, than may be desirable for simple and effective installation of the flanged bearing, for example into an engine housing;
ix. the use in some prior art devices of lines or runs of tack welding to join the thrust washers and the bearing shell may necessitate the use of jigs to support each assembly during manufacture. The resulting flanged bearing may also be relatively stiff and have low flexibility which may be undesirable for simple and effective installation of the flanged bearing into the end product, for example an engine housing; and
x. the use of welding also has the potential to introduce impurities and/or debris (e.g. weld dust) which may have an adverse impact on the performance of the bearing shell and/or the thrust washers.

The inventors have appreciated that there is a need for an improved sliding element component, particularly one that is suitable for use in a flanged bearing assembly, that is more effective than known types of sliding element components, particularly known types of flanged bearing and flanged bearing assemblies, for use in automotive engine applications, including in engines operating stop-start schemes and in particular where the sliding element component is to be used to support rotating components such as a rotatable shaft (e.g. a crankshaft).

The inventors have also appreciated that, contrary to developments in the prior art, it may not be necessary for the sliding engine component to have interlocking features for preventing rotation under torque loads.

### SUMMARY OF THE PRESENT INVENTION

The present invention seeks to provide such an improved sliding element component. In particular, the invention seeks to provide an improved sliding element component that is cheaper and easier to manufacture than known sliding element components and which can be used to form a flanged bearing assembly which has greater flexibility than known flanged bearing assemblies using mechanical engagement features such as clips and tangs.

The inventors have also appreciated that dispensing with interlocking features for preventing rotation under torque load can also make manufacture of the sliding element components cheaper and easier than known components.

In the following description, the term "flexible" preferably means that once cured, the adhesive retains some flexibility and provides a flexible coupling between the sliding element component and a further sliding element component. The term "flexible" preferably means that the adhesive is capable of elongating in use of the sliding element component. In other words, the adhesive can permit some relative movement between the sliding element component and a further sliding element component by elongation of the adhesive before it adhesive becomes detached from the sliding element component. It therefore has an elongation at break of greater than 100%.

In the following description, the term "elongation at break" preferably means the elongation at break measured in accordance with DIN 53504 ("Testing of rubber - determination of tensile strength at break, tensile stress at yield, elongation at break and stress values in a tensile test") corresponding to ISO 37 ("method for the determination of the tensile stress-strain properties of vulcanized and thermoplastic rubbers") or in accordance with the corresponding ISO standard test specified for a given adhesive.

In the following description, the term "handling time" preferably means the period of time that it takes for an adhesive to be cured sufficiently for it hold the sliding element component together with a further sliding element component to form a self-supporting sliding element assembly. After this handling time has expired, the sliding element assembly may be handled (e.g. to be inspected for quality control purposes or to be packaged for transportation), but it may take further time (hours or days) for the adhesive to be fully cured.

The present invention is defined in the appended independent claims and provides, in a first aspect, a sliding element component for sliding engagement with a rotatable component, the sliding element component being coupleable to a further sliding element component by an adhesive, the sliding element component comprising an engagement surface for engagement with a corresponding engagement surface on the further sliding element component, the engagement surface of the sliding element component comprising at least one recess for receiving an adhesive, wherein the adhesive has an elongation of break or elongation capacity of between about 100 percent and 500 percent.

In preferred embodiments of the present invention, the sliding element component may take the form of a thrust washer coupleable to a bearing shell to form a flanged bearing assembly or flanged bush.

Preferred embodiments of the present invention are particularly suitable for use in one or more of the following applications: automotive engines; transmissions; pumps; and compressor systems.

The improved sliding element component of preferred embodiments of the present invention may have a number of advantages over prior art devices, which may comprise some or all of the following, among others:-
i. the use of an adhesive instead of the clips or tangs of some prior art devices to couple the bearing shell and the thrust washers to form a self-supporting flanged bearing may reduce the complexity of the sliding element component compared to prior art devices and make it quicker and easier to assemble the flanged bearing;
ii. the use of an adhesive instead of the clips or tangs of some prior art devices may make it quicker and easier to form a self-supporting flanged bearing by eliminating the need for manual handling of the thrust washers and the bearing shell;
iii. the use of an adhesive instead of the clips or tangs of some prior art devices may reduce or eliminate the need for pinching of the bearing shell in order to engage the thrust washers;
iv. the use of an adhesive instead of the clips or tangs of some prior art devices may reduce the manufacturing lead time due to the removal of fiddly manual operations;
v. the use of an adhesive instead of the clips or tangs of some prior art devices may reduce or eliminate the volume of scrap of reject prior art flanged bearings which have been incorrectly assembled or which have become detached during transportation and handling;
vi. the use of an adhesive instead of the clips or tangs of some prior art devices may reduce or eliminate the need for close tolerances between the clips or tangs and the corresponding notches which should simplify the manufacturing process and reduce the associated cost;
vii. the use of an adhesive instead of the clips or tangs of some prior art devices may reduce or eliminate the need for port-processing operations, including deburring or the removal of ledges on the clips or tangs and/or the corresponding notches which may result from the initial forming operation. This may further simplify the manufacturing process and reduce the associated cost. It may also reduce or eliminate the introduction of debris (e.g. swarf or metal particulate) which may otherwise have an adverse impact on the performance of the bearing shell and/or the thrust washers;
viii. the use of an adhesive instead of the clips or tangs or welding of some prior art devices may reduce the stiffness and increase the flexibility of the resulting flanged bearings. This may facilitate installation of the flanged bearings into the end product, for example an engine housing. It may also reduce the proportion of scrap compared to prior devices that may be too stiff and insufficiently flexible to be installed into the engine housing;
ix. the use of an adhesive instead of the welding used in some prior art devices may reduce or eliminate the associated debris (e.g. weld dust) which may otherwise have an adverse impact on the performance of the bearing shell and/or the thrust washers; and
x. preferably, there will not be any degradation or dissolving of the adhesive during use of the flanged bearing. However, the use of an adhesive instead of the welding used in some prior art devices may mean that if there is any minor degradation or dissolving of the adhesive, the resulting debris may be softer than the metal debris that is commonly associated with the prior art devices incorporating welding and may therefore be more likely to pass through the bearing clearance without damaging the running surfaces of the thrust washers and/or the bearing shell or affecting the performance of the flanged bearing;
xi. the adhesive may be used to adhere sliding element components made from, or coated with any chosen materials. For example, the adhesive may be used to adhere sliding element components comprising a polymer-based running layer and irrespective of whether it contains any additives or particulate materials such as metal particulates; and
xii. the adhesive may reduce the number of manufacturing steps and/or the need for specialist equipment required to manufacture the sliding element component, thereby reducing the associated manufacturing cost.

In arriving at the present invention, the inventors have reduced the complexity of the prior art devices by, and taken the counterintuitive step of, removing the need for precision-machined clips and tangs with close tolerance, and the need for welding, and replacing them with a more simple adhesive coupling. In order to arrive at this simple and effective solution, the inventors have taken a step back from the known path of development of flanged bearings and made an improvement which has a number of clear advantages compared to the use of known flanged bearings. The inventors have effectively reengineered the construction of flanged bearings and provided an elegant solution to the limitations associated with known flanged bearings by making them simpler and cheaper to make and simpler and easier to use. In particular, they have provided a sliding element component better suited for use with an adhesive that improves the adherence of the adhesive and the flexibility of a resulting assembly. They have also appreciated that the adhesive is only required for handling and installation of the resulting assembly and so the sliding element component need not have any mechanical engagement features for preventing rotation of the sliding element component during use of the resulting assembly. The sliding element component is therefore cheaper and easier to manufacture than known components, both in terms of reduced material volumes and a reduced need for specialist manufacturing equipment and fewer manufacturing steps.

The inventors have appreciated that selection of the adhesive is key to the performance of the sliding element component. Preferably, the adhesive will have some or all of the following properties, among others:-
i. a suitable balance between cure time and flexibility of the sliding element component. In order for the adhesive to cure quickly, the sliding element component may end up being stiffer and less flexible than may be desirable. However, in order for the sliding element component to be reasonably flexible, the cure time of the adhesive may be longer than may be desirable which may affect the manufacturing lead time;
ii. a viscous flexible adhesive that is self-supporting as soon as it is dispensed, or soon after it is dispensed, from the dispensing apparatus, and that remains self-supporting as it cures. There may be a balance to be achieved here between ensuring that the flexible adhesive may be dispensed relatively quickly and uniformly and ensuring that the flexible adhesive is viscous and self-supporting and resistant to running or smearing;
iii. the adhesive, once cured, has a relatively high elongation at break (or elongation capacity). If its elongation capacity is too low, the flexible adhesive may have a tendency to reach its elastic limit too early and fail during handling or installation of the sliding element component. However, in order for its elongation capacity to be high, that may require the flexible adhesive to be quite fluid which may necessitate a longer cure time before it is self-supporting which may have an impact on the manufacturing lead time;
iv. offer effective resistance to degradation in the presence of lubricants such as engine oil;
v. offer effective resistance to degradation in the operating temperatures associated with automotive engines (e.g. in the range 90 degrees C to 150 degrees C; and
vi. have sufficient bond strength or adhesion strength to make a resulting assembly self-supporting during handling and installation.

Some preferred features of the present invention are set out in the dependent claims to which reference should now be made.

Preferably, the sliding element component is for sliding engagement with and/or for supporting a rotatable shaft. Preferably, the sliding element component is for sliding engagement with and/or for supporting a rotatable shaft being a component of an engine. Preferably, the sliding element component is for sliding engagement with and/or for supporting a crankshaft and/or a camshaft. Preferably, the sliding element component is for sliding engagement with and/or for supporting a crankshaft and/or a camshaft for an automotive engine. Preferably, the sliding element component is for sliding engagement with and/or for supporting a crankshaft and/or a camshaft for an engine operating a start-stop engine cycle.

Preferably, a depth of the at least one recess in the engagement surface of the sliding element component is between about 0.1mm and about 1mm. In other words, the at least one recess extends/recedes away from the engagement surface by between about 0.1mm and about 1mm so as to form a recess (or notch or cut out or pocket or hole) for receiving an adhesive. More preferably, a depth of the at least one recess in the engagement surface of the sliding element component is about 0.5mm.

A length of the at least one recess may be variable and is likely to be application dependent. Preferably, a length of the at least one recess in the engagement surface of the sliding element component is between about 2mm and about 7mm, though it could be larger, or small. In an example sliding element component suitable for use in a passenger car, a length of the at least one recess in the engagement surface of the sliding element component may be between about 3mm and about 5mm. The at least one recess may have curved or rounded ends.

Preferably, the at least one recess may have a continuous depth along its length. Alternatively a depth of the at least one recess may vary along its length.

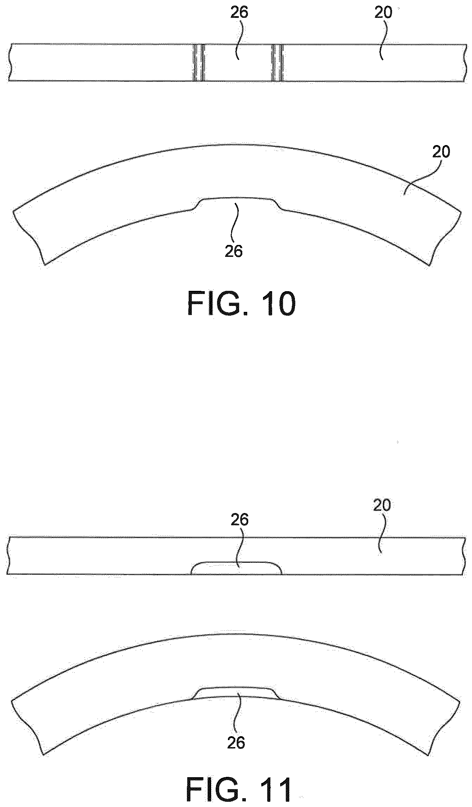

The at least one recess may extend through the whole or any portion of the thickness of the sliding element component. In other words, when viewing the sliding element component from the side, the at least one recess may extend all the way through a thickness of the sliding element component thereby forming a through recess as shown in Figure 10 or may extend only part of the way through a thickness of the sliding element component thereby forming a blind recess or a cavity or a pocket as shown in Figure 11.

Preferably, the sliding element component comprises a plurality of recesses in the engagement surface of the sliding element component. The sliding element component may comprise any number of recesses in the engagement surface of the sliding element component. Preferably, the sliding element component comprises between 1 and 12 recesses in the engagement surface of the sliding element component. More preferably, the sliding element component comprises between 3 and 10 recesses in the engagement surface of the sliding element component. More preferably, the sliding element component comprises between 3 and 8 recesses in the engagement surface of the sliding element component. A sliding element component comprising between 1 and 6, preferably 3 or 4 recesses may be particularly suitable for use as a thrust washer for an automotive engine intended for a passenger car. A sliding element component comprising between 4 and 12, preferably between 6 and 10 recesses, more preferably 6 or 7 or 8 recesses may be particularly suitable for use as a thrust washer for an automotive engine intended for a larger vehicle such as a lorry or truck.

Preferably, each of the recesses is identical to the other recess or recesses. However, this need not be the case and a combination of any two or more recesses referred to in this description may be used.

Preferably, the plurality of recesses is evenly spaced around the engagement surface of the sliding element component. Alternatively, some or all of the recesses may have an irregular spacing around the engagement surface of the sliding element component.

The present invention is further defined in the appended independent claims and provides, in a second aspect, a thrust washer comprising the features of the sliding element component of the first aspect of the invention. Preferably, the at least one recess in the engagement surface of the thrust washer is proximate an inner edge defining an inner diameter of the thrust washer.

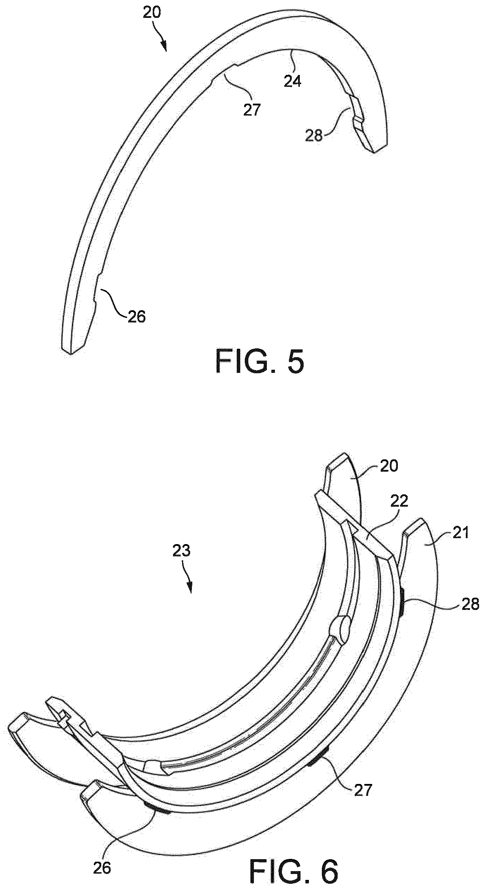

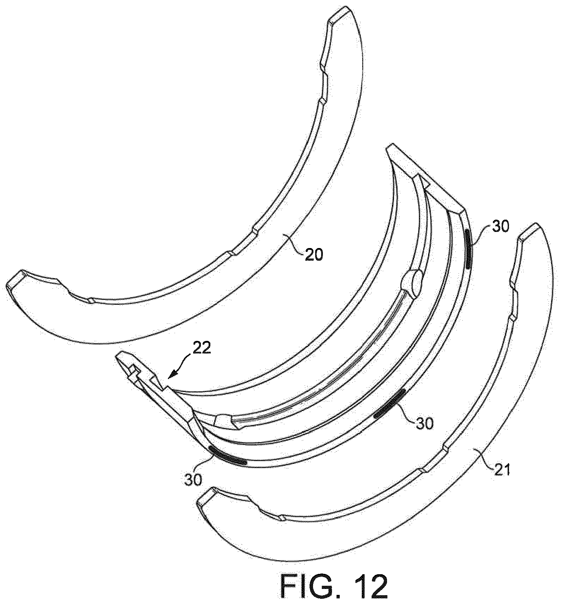

As will be discussed further below, the at least one recess in the engagement surface may be positioned on an axial face of the thrust washer that is engageable with an axial face of a bearing shell (e.g. against a side surface of the bearing shell that extends between the inner surface (or running layer surface) and outer surface (or the backing layer surface or back side of the bearing shell) (Figures 6 to 9). Alternatively, the at least one recess in the engagement surface may be positioned on a radial face of the thrust washer that is engageable with a radial face of a bearing shell (i.e. the inner surface of the thrust washer that engages with a backing layer surface or back side of the bearing shell) (Figure 12).

The thrust washer may be a simple, known-type of thrust washer, such as a metal or bi-metal thrust washer that is typically used in the construction of flanged bearings for automotive engine applications. Alternatively, the thrust washer may, for example, comprise a polymer-based running layer or a sintered coating of a suitable material.

A suitable thrust washer may be one of the type described in published international patent application number WO2014/091206, providing a thrust washer comprising a polymer layer of profiled thickness, or of the type described in UK patent application number No. GB1507205.1 providing a thrust washer comprising a polymer-based running layer comprising a textured surface. However, it will be appreciated that these earlier thrust washers will require some modification in accordance with preferred embodiments of the present invention.

The bearing shell may be a simple, known, type of bearing shell, such as a metal or bi-metal bearing shell that is typically used in the construction of flanged bearings for automotive engine applications. Alternatively, the bearing shell may, for example, comprise a polymer-based running layer or a sintered coating of a suitable material.

The present invention is further defined in the appended independent claims and provides, in a third aspect a flanged bearing assembly (or flanged bush) comprising a pair of the sliding element components of the first aspect of the invention or a pair of the thrust washers of the second aspect of the invention and a bearing shell, wherein each sliding element component or thrust washer is coupled to the bearing shell by an adhesive so as to form a self-supporting flanged bearing assembly. The sliding element components or the thrust washers used in the flanged bearing assembly may be identical or different from one another.

Preferably, the thrust washers are adhered to the bearing element by a flexible adhesive.

The flexible adhesive may be a one part flexible adhesive. The flexible adhesive may alternatively be a multi-part flexible adhesive (e.g. a two-part or a three-part flexible adhesive). A single part flexible adhesive may be quicker and easier to apply and may be stored in the applicator head of a dispensing apparatus for a longer period of time before it cures and the applicator head must be replaced or cleaned (sometime referred to as "pot life"). A multi-part flexible adhesive (e.g. a two-part flexible adhesive) may provide a faster curing time and thereby a reduction in the manufacturing lead time. However, it may also have a shorter pot life.

Preferably, the adhesive is a one component UV light curing adhesive. Preferably, the adhesive is cured in two stages. Preferably, the first curing stage is a UV light curing stage. This may be done using known techniques. Preferably, the second curing stage is a humidity curing stage, permitting additional curing of the adhesive when the UV light is removed or of the central portion of the adhesive film that may not be reached by UV light in the initial curing stage. According to the invention, the flexible adhesive, once cured, has an elongation at break (or elongation capacity) of between about 100 percent and about 500 percent. Preferably, the flexible adhesive, once cured, has an elongation at break (or elongation capacity) of greater than about 350 percent. Preferably, the flexible adhesive, once cured, has an elongation at break (or elongation capacity) of between about 350 percent and about 450 percent, preferably about 400 percent. This may reduce the likelihood of the flexible adhesive being detached from the first and/or the second sliding element component during handling or installation of the sliding element component.

Preferably, the flexible adhesive comprises an acrylate. A particularly suitable adhesive is a one component adhesive based on a modified acrylic resin.

The adhesive may be clear / colourless. Preferably, it changes colour during curing as a visual indication that the cure is complete. Once cured, the surface of the adhesive may remain tacky or sticky and have the appearance of not being completely dry.

Preferably, the adhesive is resistant, during use of the sliding element component, to lubricants, particularly engine oils, and to typical engine operating temperatures, particularly in the region of about 90 degrees C to about 150 degrees C. This makes the sliding element component particularly suitable for use in engines, for example, where the sliding element component is used to support a crankshaft and is immersed in engine lubricating oil.

Preferably, the adhesive is viscous and substantially self-supporting. This may reduce a likelihood of the flexible adhesive running or smearing and contaminating the running surfaces of the sliding element components. It may also reduce the need for delicate handling of the sliding element components (e.g. thrust washers and/or bearing shells) to which the flexible adhesive is applied. It may also reduce the period of time during which the components must remain stationary once the flexible adhesive has been applied before they may be handled (i.e. reduce the handling time). There is a balance between ensuring that the adhesive is fluid enough to enable only a small amount to be applied to the thrust washers and/or the bearing shell and ensuring that it does not subsequently run onto the running surface of the thrust washers and/or the bearing shell. With this in mind, preferably, the adhesive has a viscosity of greater than about 3500 mPas / thix.

Preferably, once cured, the flexible adhesive has a bond strength or adhesion strength of greater than 10 MPa. Preferably, once cured, the flexible adhesive has a bond strength or adhesion strength of between about 10 MPa and about 20 MPa. More preferably, the flexible adhesive has a bond strength or adhesion strength of between about 12 MPa and about 16 MPa. More preferably, the flexible adhesive has a bond strength or adhesion strength of about 14 MPa. Such a bond strength or adhesion strength should be sufficient to facilitate handling and installation of a resulting sliding element assembly (e.g. a flange bearing assembly).

As will be discussed below, the flexible adhesive may be applied to the bearing shell. Alternatively, the flexible adhesive may be applied to each thrust washer. Alternatively, the flexible adhesive may be applied both to the bearing shell and to each thrust washer. As will be discussed below, when the flexible adhesive is applied to the bearing shell, it may be applied to a back side of the bearing shell, proximate the edges (Figures 6 to 9). Alternatively, it may be applied to the side face of the bearing shell (Figure 12). When the flexible adhesive is applied to the thrust washers, it may be applied to a top or bottom face of each thrust washer for engagement with the backside of the bearing (Figures 6 to 9). Alternatively, it may be applied to the side face of each thrust washer for engagement with a side face of the bearing shell (Figure 12).

Preferably, the adhesive is applied to the bearing shell only at the portion or portions of the engagement surface of the bearing shell that will engage with the corresponding recess or recesses in the engagement surface of each thrust washer. In other words, the adhesive is preferably only applied to the bearing shell where it will be engaged by the recess or recesses in the engagement surface of each thrust washer when the thrust washers are brought into engagement with the bearing shell. Alternatively, the adhesive is applied only to the recess or recesses in the engagement surface of each thrust washer. Alternatively, the adhesive is applied both to the thrust washers and to the bearing shell in the aforementioned locations.

Applying the adhesive in such a manner means that the majority or all of the adhesive is retained within the recess or recesses and so there is minimal or no spreading or overspill of the adhesive out of the recess or recesses when the thrust washers are brought into engagement with the bearing shell. This has the advantage that there is little or no contamination of the running surface of the thrust washers by the adhesive.

As thrust washers for flanged bearings for automotive applications are typically between about 1mm and about 5mm thick, the bead of flexible adhesive is preferably applied to the first sliding element component (e.g. a bearing shell) so that it has a diameter or thickness of less than the thickness of the thrust washer. For example, where the thrust washers are, say, 1mm thick, the adhesive is preferably applied so that it has a thickness or diameter of between about 0.1mm and about 1mm, more preferably between 0.4mm and about 0.6mm, more preferably about 0.5mm.

In preferred embodiments of the present invention, the adhesive may be the only means for coupling the sliding element component to a further sliding element component (e.g. coupling the thrust washers and the bearing shell). The adhesive is designed to form a flexible and self-supporting flanged bearing assembly which can be handed and installed into an engine block without the need for any other mechanically engaging features such as those described in the prior art. The adhesive is not required to maintain the thrust washers in engagement with the bearing shell during use of the flanged bearing assembly (e.g. in an engine) and it is generally expected and accepted that the adhesive will fail during use of the flanged bearing assembly and that this may permit some relative rotation movement of the thrust washer and bearing shell - something that the prior art has sought specifically to avoid.

However, if required, there may also be one or more additional engagement features. For example, the thrust washers may additionally be coupled to the bearing shell by one or more mechanical couplings or interlocking mechanical features such as those described in the prior art. This may enable the flanged bearing assembly to withstand higher torque loads that might otherwise overcome the bond strength or adhesion strength of the flexible adhesive or lead to the flexible adhesive extending beyond its elongation at break and cause it to fail. The one or more mechanical couplings may prevent the thrust washers from rotating, during use of the flanged bearing, relative to the bearing shell.

Suitable mechanical couplings may for comprise one or more tabs or tags on the sliding element component (e.g. thrust washer) that are engageable with one or more notches, cut-outs or slots on a further sliding element component (e.g. a bearing shell). The bearing shell may comprise a single notch in each side of the bearing shell that is positioned at, or near to, the crown of the bearing shell. Preferably, the thrust washers each comprise a single tab extending at or near the crown of each thrust washer in a direction that is perpendicular to a tangent to the curved outer surface of the thrust washer. In other words, the single tab preferably extends towards a centre of curvature of the thrust washer. Preferably, the tabs are engageable with the notches so as to interlock the sliding element components (e.g. thrust washers and the bearing shell) and constrain them relative to one another so as to prevent relative rotation of the sliding element components.

Alternatively, the bearing shell may comprise a single tab and the thrust washers may comprise a single notch or cut-out (i.e. the reverse of the arrangement described above).

In a further alternative embodiment (not shown in the Figures), the at least one recess for receiving a flexible adhesive may be used in addition to one or more engaging clips or tangs such as those used in some prior art flanged bearings. This may provide a flanged bearing having additional stiffness compared to a flanged bearing having only an adhesive coupling or only having the one or more clips or tangs. Alternatively, it may enable the clips or tangs to have lower tolerances (i.e. to be a looser fit) than those that are used in some prior art flanged bearings, which may have a number of benefits over the prior art flanged bearings having close tolerances, including some or all of the benefits described above.

The notches of the bearing shell and/or the tabs of the thrust washers (or vice-versa) may be spaced from the crown so as to provide a mistake-proofing (or 'poka-yoke') device to assist operators on the manufacturing line to identify the correct orientation of the thrust washers relative to the bearing shell.

Preferably, one or both of the bearing shell and the thrust washers comprises a polymer-based running layer. However, other running layer materials may also be used, including a sintered coating of a suitable material. A further advantage of sliding element components according to preferred embodiments of the present invention is that, unlike in some known machined flanged bearings, different materials may be used for the running surfaces or running layers of the sliding element component (e.g. thrust washer) and the further sliding element component (e.g. bearing shell)./ For example, one of them may have a polymer-based running layer and the other may have a running layer or surface made from a different material.

Preferably, the polymer-based running layer is formed on the bearing shell and/or the thrust washer substrate by a spraying or a screen printing process.

The polymer-based running layer may be applied directly to the thrust washer substrate and/or the bearing shell substrate. Alternatively, the polymer-based running layer may be applied to an intermediate layer applied to the thrust washer substrate and/or the bearing shell substrate. The thrust washer substrate and/or the bearing shell substrate may be a metal or bi-metal substrate. The intermediate layer may also be a metal or bi-metal layer.

The polymer-based running layer may be formed by depositing a plurality of polymer-based sub-layers. The plurality of polymer-based sub-layers may comprise sub-layers of the same or different thicknesses. Successive polymer running layers may be differently patterned, to build up a profiled polymer-based running layer of non-uniform thickness. The use of sub-layers may provide greater control of the thickness of the profiled polymer running layer.

The present invention is further defined in the appended independent claims and provides, in a fourth aspect, an engine comprising the sliding element component of the first aspect of the invention, or the thrust washer of the second aspect of the invention, or the flanged bearing assembly (or flanged bush) of the third aspect of the invention.

The present invention is further defined in the appended independent claims and provides, in a fifth aspect, a method of assembling a flanged bearing assembly, the method comprising the steps of:
(i) providing a pair of sliding element components according to the first aspect of the invention or a pair of thrust washers according to the second aspect of the invention;
(ii) providing a bearing shell;
(iii) applying an adhesive to the, or each, recess in the engagement surface of each sliding element component or each thrust washer or applying an adhesive to the corresponding engagement surfaces on the bearing shell in a position corresponding to the, or each, recess in the engagement surface of each sliding element component or each thrust washer;
(iv) bringing the sliding element components or thrust washers into engagement with the bearing shell along the respective engagement surfaces; and
(v) maintaining the sliding element components or thrust washers in contact with the bearing shell along the respective engagement surfaces while the adhesive is at least partially cured so as to form a self-supporting flanged bearing assembly.

Preferably, a handling time will be less than about 10 minutes, more preferably less than about 5 minutes, more preferably less than about 1 minute, more preferably less than about 30 seconds, more preferably less than about 20 seconds, more preferably less than about 10 seconds, more preferably less than about 5 seconds. In particularly preferred embodiment, the handling time will be less than about 5 seconds, more preferably between about 2 and about 5 seconds. This may provide a suitable balance between the required manufacturing lead time and the ability to handle the self-supporting sliding element component or flanged bearing or flanged bush assembly.

As is well known in the prior art, each thrust washer may be provided with one or more oil distribution grooves running between the inner and outer edges of the thrust washer. Preferably, the oil distribution grooves extend across the thrust washer from the inner edge to the outer edge in a continuous arrangement enabling through flow of oil. The axial face of the polymer-based running layer may therefore comprise a plurality of disconnected portions, separated by the one or more oil distribution grooves. The provision of the oil distribution grooves in the axial face of the thrust washer may enhance the quality of the oil film between the thrust washer and the shaft. In use, lubricating oil may be pumped into the bearing clearance between the corresponding bearing shell and rotating crankshaft journal, and leaks out into the further clearance between the thrust washer and the counterface of the rotating crankshaft web.

The oil grooves may extend all the way through a depth of the polymer running layer. In this arrangement, a base of the grooves may be formed by the thrust washer substrate or by an intermediate layer positioned on the thrust washer substrate. This may result, for example, from applying the polymer-based running layer to the thrust washer substrate and/or a lining or intermediate layer by a spraying or screen printing process in which the polymer-based running layer is applied to the substrate (or an intermediate layer) in a single spraying or screen printing operation, or in a series of spraying or screen printing operations, using a mask to prevent application of the polymer-based running layer on certain portions of the thrust washer substrate.

Alternatively, the oil grooves may extend partially through a depth of the polymer-based running layer deposited on the thrust washer substrate. In this arrangement, the base of the grooves may be formed by a portion of the thickness of the polymer-based running layer. This may result, for example, from applying the polymer-based running layer over the entire axial face of the thrust washer substrate and subsequently removing a portion of the axial face of the polymer-based running layer using a material removal process, or by applying the polymer to the thrust washer substrate in a series of sublayers i.e. building up the polymer-based running layer using a series of two or three or more layers and subsequently removing a portion of only one, or some, of the sublayers to form the oil grooves.

The thrust washers and/or the bearing shell may be provided with joint face relief portions at one or both ends.

The position of the recess or recesses in the engagement surface of the thrust washers need not have any relationship to the position of any oil distribution grooves.

Although the various Figures and the associated description show flanged bearings (i.e. flanged semi-annular bearings), the present invention equally applies to flanged bearings (i.e. flanged annular bearings).

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

### BRIEF DESCRIPTION OF THE DRAWINGS

Some example embodiments of the present invention will now be described with reference to the accompanying drawings, in which:-
Figure 1 is a perspective view of a prior art sliding element in the form of a flanged bearing comprising a bearing shell and a pair of thrust washers;
Figure 2 is an exploded perspective view of the prior art flanged bearing of Figure 1;
Figure 3 is a perspective view of a further prior art sliding element in the form of a flanged bearing comprising a bearing shell and a pair of thrust washers;
Figure 4 is an exploded perspective view of the prior art flanged bearing of Figure 3;
Figure 5 is a perspective view of a sliding element component according to an example embodiment of the present invention in a first aspect, or according to a thrust washer according to an example embodiment of the present invention in a second aspect;
Figure 6 is a perspective view of a flanged bearing assembly according to an example embodiment of the present invention in a third aspect comprising a pair of the sliding element components or thrust washers of Figure 5 and a bearing shell;
Figure 7 is a side view of the flanged bearing assembly of Figure 6;
Figure 8 is a perspective view of a bearing shell of the flanged bearing assembly of Figure 6;
Figure 9A is a further side view of the flanged bearing assembly of Figure 6 with the thrust washers in an elevated position above the bearing shell of Figure 8;
Figure 9B is a further side view of the flanged bearing assembly of Figure 6 with the thrust washers having been brought into engagement vertically with the bearing shell of Figure 8 so that the adhesive is received within the recesses in an engagement surface of the thrust washers;
Figure 10 is a close up side view and bottom view of at least one recess an engagement surface of the sliding element component of Figure 5 in which the recess is a through recess passing through the whole of a thickness of the sliding element component;
Figure 11 is a close up side view and bottom view of an alternative form of the at least one recess an engagement surface of the sliding element component of Figure 5 in which the recess is a blind recess or pocket passing only part way-through the whole of a thickness of the sliding element component;
Figure 12 is a perspective view of a flanged bearing comprising a pair of sliding element components or thrust washers of Figure 5 being brought into engagement horizontally with a bearing shell so as to form a flanged bearing assembly;
Figure 13 is a perspective view of a sliding element component according to an example embodiment of the present invention in a first aspect or a thrust washer according to an example embodiment of the present invention in a second aspect having 6 recesses in an engagement surface of the sliding element component or thrust washer; and
Figure 14 is a perspective view of a sliding element component according to an example embodiment of the present invention in a first aspect or a thrust washer according to an example embodiment of the present invention in a second aspect having only 1 recess in an engagement surface of the sliding element component or thrust washer.

### DETAILED DESCRIPTION OF EXAMPLE EMBODIMENTS

Figure 5 illustrates a sliding element component 20 according a first example embodiment of the present invention in which the sliding element component takes the form of a thrust washer.

The thrust washer is coupleable to a further sliding element component. For example, the thrust washer 20 is coupleable to a bearing shell 22. More specifically, a pair of the thrust washers 20, 21 is coupleable to the bearing shell 22 using an adhesive to form a flanged bearing assembly 23.

The thrust washer comprises an engagement surface 24 for engagement with a corresponding engagement surface 25 on the bearing shell. The engagement surface of the thrust washer comprises at least one recess 26. The at least one recess is for receiving an adhesive.

The at least one recess in the engagement surface of the thrust washer is preferably formed during the initial stamping/pressing/forming operation. Alternatively, the at least one recess may be subsequently machined into the thrust washer.

As will be discussed further below, the at least one recess may be beneficial at least in that it may aid the curing process for curing the adhesive and/or may provide the resulting flanged bearing assembly with greater flexibility compared to a thrust washer not having the at least one recess in the engagement surface.

Preferably, the engagement surface of the thrust washer comprises a plurality of recesses 26, 27, 28. A particular preferred number of recesses is between 1 and 6, preferably 2 or 3 or 4, for a passenger vehicle (e.g. a family car) and between 4 and 12, preferably between 4 and 10, more preferably 6 or 7 or 8, for a large vehicle such as a lorry or truck.

The, or each, recess is preferably about 0.5mm deep. Although the depth may be less than or more than 0.5mm, 0.5mm is believed to be about the right balance for ensuring that the adhesive can be effectively applied and that there is no, or minimal, smearing of the adhesive as the thrust washers and bearing shell are brought together along their respective engagement surfaces sandwiching the adhesive between them.

The, or each, recess is preferably between about 3mm and about 5mm long.

The particular configuration of the recesses in the engagement surface is application dependent. However, some example configurations for a car comprise the following recesses in the engagement surface of each of the thrust washers forming the flanged bearing assembly: four 3mm long recesses or four 4mm long recesses four 5mm long recesses or three 4mm long recesses or three 5mm long recesses or three 6mm long recesses.

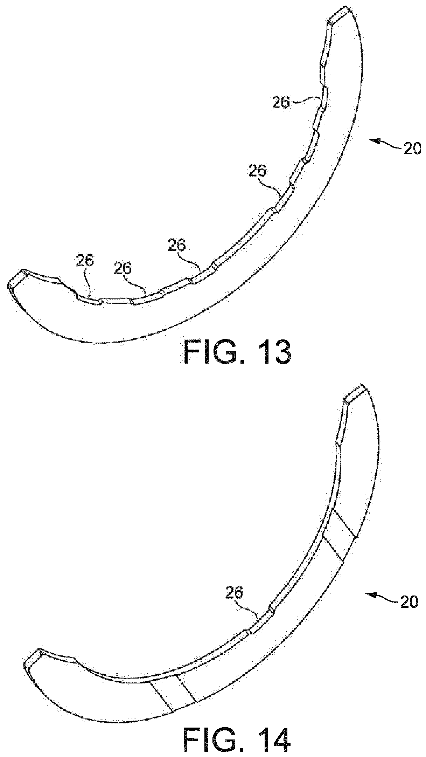

Each thrust washer comprises one or more oil distribution grooves (e.g. Figure 14) for permitting through flow of oil to the counterface between the thrust washer and the crankshaft. Each thrust washer also comprises a chamfer along at least one edge 29.

Figures 6 to 9 and 12 show a flanged bearing assembly according to example embodiments of the present invention. The flanged bearing assembly comprises a pair of the thrust washers 20,21 previously described and a bearing shell 22. The thrust washers are coupleable to the bearing shell using an adhesive. More preferably, the thrust washers are coupleable to the bearing shell using only an adhesive.

The bearing shell 22 may be a known type of bearing shell. It may comprise a joint face relief portion at each end for accommodating cap shift of two opposing bearing shells.

Each of the thrust washers 20,21 comprises a thrust washer substrate, which may be a bi-metal thrust washer substrate and a sliding layer, commonly referred to as a 'running layer', 'sliding layer' or 'overlay', applied to the thrust washer substrate. The running layer of each thrust washer is preferably a polymer-based running layer.

The bearing shell comprises a bearing substrate, which may be a bi-metal substrate and a sliding layer applied to the bearing substrate. The running layer is preferably a polymer-based running layer.

The polymer-based running layer of the thrust washers and/or the bearing shell is formed of a running layer material and is formed on the underlying thrust washer substrate to give the thrust washer the desired characteristics e.g. the desired load carrying capacity and wear resistance. The matrix of the running layer material (which generally provides the highest volume percentage portion of the running layer material) is formed of a polymeric material. Examples of suitable polymeric materials comprise: cross-linkable bonding agents; thermosetting plastics; high melting point thermoplastics; materials comprising a matrix of at least one high melting point thermoplastic material; fibre-reinforced plastics; any combination of these materials. Other suitable materials are envisaged and will be readily apparent to the skilled person. Particularly suitable polymeric materials comprise: PAI (Polyamide-imide); PI (Polyimide); epoxy; epoxy resin; phenolic resin; silicone resin; polyether ether ketone or a combination of any of these materials. These materials are characterised by high temperature resistance and excellent media resistance (such as chemical resistance to lubricants). One particularly preferred polymeric material for thrust washers according to preferred embodiments of the present invention is Polyamideimide (PAI).

The running layer material may comprise a composite of a plastics polymer matrix with one or more particulates. For example, running layer material may comprise a hard particulate to provide improved wear resistance (e.g. ceramic powder, silica, and metal powder such as aluminium flakes). Other suitable materials are envisaged and will be readily apparent to the skilled person.

The running layer material may optionally comprise at least one soft particulate e.g. a solid lubricant. Suitable solid lubricants comprise: metal sulphides with layered structures; graphite; hexagonal boron nitride (h-BN); molybdenum disulfide (MoS₂); tungsten disulphide (WS₂); a fluoropolymer such as PTFE; or a combination of any of these materials. Other suitable materials are envisaged and will be readily apparent to the skilled person.

The running layer material may comprise a matrix of a Polyamide-imide plastics polymer material and comprising distributed throughout the matrix: between about 5%vol and about 15%vol of a metal powder; between about 1%vol and about 15%vol of a fluoropolymer, the balance being the Polyamide-imide resin (apart from incidental impurities).

The running layer material may optionally comprise one or more additional materials or particulates in order to tailor its properties to a particular application, as will be readily apparent to the skilled person.

Optionally, each thrust washer substrate and/or the bearing substrate may comprise an intermediate layer which may provide an improved surface for adhesion of the polymer-based running layer and may be advantageous when certain supporting materials are used. Suitable materials for the optional intermediate layer comprise nickel, silver, copper and/or iron or alloys comprising one or more of such materials. The optional intermediate layer may comprise a combination of two or more or such materials/alloys. The intermediate layer may also comprise an adhesion promoter and/or be subjected to a pre-treatment, for example a phosphating, chromating or silicating treatment. Other suitable materials are envisaged and will be readily apparent to the skilled person.

An adhesive film (or run or bead) 30 is used to adhere each thrust washer to the bearing shell along respective engagement surfaces so as to provide a self-supporting flanged bearing assembly.

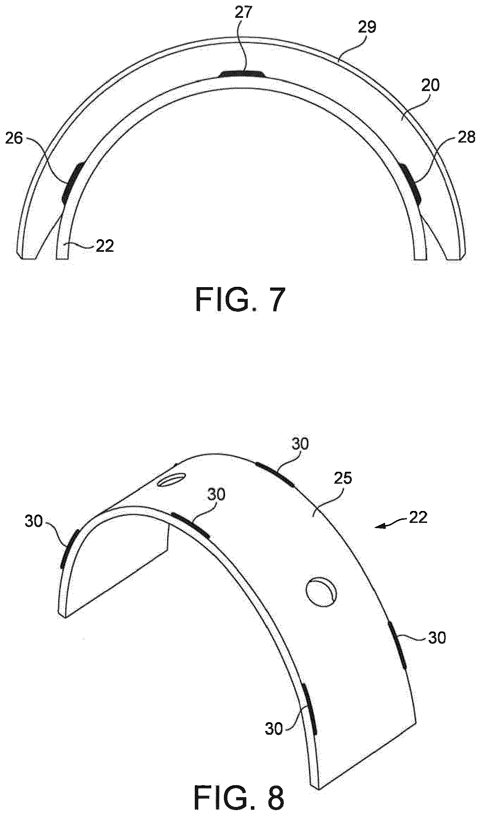

As shown in Figure 8, the adhesive film 30 is preferably applied first to the bearing shell 22. The adhesive film is applied to a back side of the bearing shell proximate the outer edges. The adhesive film is applied only to the portion or portions of the engagement surface of the bearing shell that will engage with the corresponding recess or recesses in the engagement surface of each thrust washer. In other words, the adhesive film is only applied to the bearing shell where it will be engaged by the recess or recesses in the engagement surface of each thrust washer when the thrust washers are brought into engagement with the thrust washers.

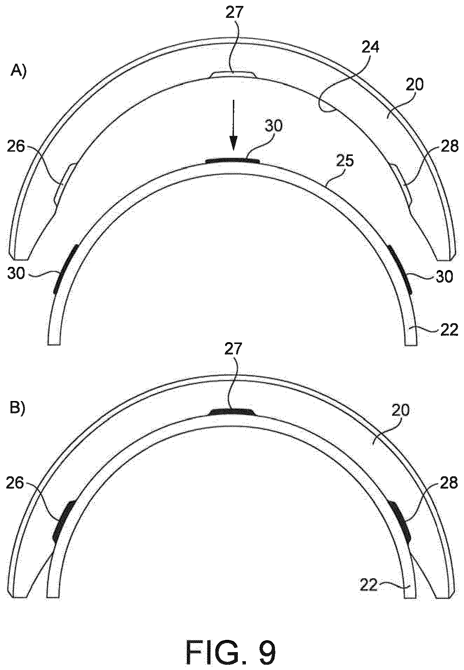

As shown in Figure 9, assembly of the flanged bearing involves positioning the bearing shell with the film of flexible adhesive applied to the back side in an upturned position so as to form an arch and then simultaneously lowering the thrust washers onto the bearing shell and continuing to lower them until the thrust washers are engaged with the bearing shells along the engagement surfaces and the adhesive is sandwiched between them to form the arrangement of Figures 5 to 7.

The at least one recess in the engagement surface of the sliding element component may provide a more stable foundation for the adhesive and better bonding of the adhesive film compared to a sliding element component which does not have any the at least one recess in the engagement surface.

The at least one recess in the engagement surface may also permit the use of a thicker bead of adhesive compared to the use of a sliding element component not having the at least one recess as there is an additional volume for accommodating the adhesive. This may mean that once the adhesive film is cured, the resulting flanged bearing assembly is more flexible due to greater capacity for the adhesive to expand. This may facilitate handling of the assembly and installation of it into an engine. There is however a balance to be achieved between the stage one curing time (or handling time) and the flexibility of the cured adhesive.

The flexible adhesive may be applied to the bearing shell in the form of a bead of adhesive as shown in Figures 6 to 9 and 12. Preferably, the adhesive bead has a diameter or thickness this is substantially the same as, or only slightly greater than a depth of the, or each, recess in the engagement surface. The adhesive bead preferably has a diameter or thickness of about 0.5mm i.e. about the same as a preferred depth of each recess. This means that when the thrust washers are brought to engagement with the bearing shell, although there may be some flattening and spreading out of the flexible adhesive bead, there will be minimal, or no, spreading or overspill of the flexible adhesive beyond the width of the thrust washers, which are typically between about 1 mm and about 2mm thick. It also means that there is unlikely to be any spreading or overspill of the flexible adhesive over the ends of the, or each, recess in the engagement surface onto the running layer of the thrust washers and/or the bearing shell that would otherwise contaminate the running layer surface.

As the flexible adhesive is preferably applied to the back side or back surface of the bearing shell (i.e. opposite side of the bearing substrate to the running layer) (Figures 6 to 9) which is not typically coated with the polymer-based running layer material, the flexible adhesive is applied to a bare metal surface. As the engagement surface of the thrust washers that bear against the backside of the bearing shell (i.e. the face connecting the inner and outer annular shaped side surfaces - the lower face as shown in the drawings) is not typically coated with the polymer-based running layer material, the flexible adhesive will typically come into contact with a further bare metal surface. Therefore, when the thrust washers are brought to engagement with the bearing shell, the flexible adhesive will be sandwiched between two bare metal surfaces promoting adhesion between the sliding element components. However, a further advantage of the flexible adhesive is that it may be applied to a surface of any material and could therefore also be used on surfaces that are provided with a polymer-based running layer or a running layer comprising other materials, or where the running layer material extends onto the engagement surface of either or both of the thrust washers and bearing shell or into the recesses in the engagement surface.

A particularly suitable adhesive is a one component adhesive based on a modified acrylic resin.

The adhesive is a flexible adhesive which retains a degree of flexibility once it is cured. As such it has an elongation at break of greater than 100%.

The flexible adhesive is resistant, during use of the flanged bearing, to engine oil and to engine temperatures in the region of about 90 degrees C to about 150 degrees C. This makes it particularly suitable for use in automotive engine environments, for example, where the flanged bearing is used to support a crankshaft and where it is immersed in engine lubricating oil or regularly comes into contact with engine oil.

The adhesive is highly viscous and self-supporting. Preferably the flexible adhesive is a thixotropic material, preferably a thixotropic paste. The flexible adhesive preferably has, once cured, according to DIN 53504, an elongation at break of greater than about 100 percent or about 150 percent or about 200 percent or about 250 percent or about 300 percent or about 350 percent or about 400 percent and/or less than about 400 percent or about 350 percent or about 300 percent or about 250 percent or about 200 percent or about 150 percent. Preferably once cured, it has, according to DIN 53504, an elongation at break of greater than about 350%.

As a result of the desired characteristics of the flexible adhesive, including the requirement for flexibility, the flexible adhesive is likely to have an adhesion strength of between about 10MPa and about 20MPa.

The adhesive is curable in two phases. In a first phase, it is cured by UV light with a wavelength of 315 to 400nm. If the adhesive were subjected to such light for a sufficiently long period, it would be completely cured. However, the inventors have appreciated that it is only necessary to cure the adhesive using UVA light for a short time until it is cured sufficiently for the flanged bearing assembly to be a self-supporting and capable of being further handled or moved along a production line. This is also referred to as the handling time. This initial curing stage will depend on a number of factors such as the adhesive layer thickness and absorption, the type of UV lamp used and the distance between the light sources and the adhesive film. Dependant on these factors, it may only take a few seconds or minutes. The handling time is preferably less than about 5 seconds, preferably between about 3 and about 5 seconds. This may equate to a total assembly time of about one minute, or less.

Curing using UV light requires line of sight to the adhesive film. Typically, this requires one of the adherents or workpieces to be permeable to UV light. However, this would not be practicable for the manufacture of flanged bearing assemblies. The addition of the one or more recesses in the engagement surface of the thrust washer is therefore an effective way of improving the line of sight of the UV light to a greater portion of the adhesive film and accelerating the first stage of the curing process. This also helps to minimise the manufacturing lead time of the flanged bearing assemblies.

In a second curing stage, the adhesive continues to be cured by humidity as the flanged bearing assembly passes along the production line or is allowed to rest. The further curing time will also depend on a number of factors including the ambient temperature and the relative humidity. Dependant on these factors, it may take a few or several hours for the adhesive to cure fully. It may be possible to accelerate the second stage curing process of the adhesive, if required, by increasing the temperature and/or the humidity.

Curing the remainder of the adhesive by humidity means that the adhesive which has not been cured by UV light (e.g. any part of the surface of the adhesive bead or film to which the UV light sources has not had line of sight or a central portion of the film or bead) will continue to be cured in the absence of the light, e.g. as the flange bearing assembly is laid to rest after the UV curing stage or continues along the manufacturing line.

The alternative example embodiments illustrated in Figures 13 and 14 show that the sliding element component may be provided with a greater number of recesses in engagement surface - for example 6 of them - or with fewer recesses in engagement surface - for example only one of them. The thrust washers may also comprise an alternative number of recesses in engagement surface.

In an alternative embodiment (not shown in the Figures), each thrust washer forming a flange bearing assembly may alternatively comprise different numbers of recesses in engagement surface and / or may comprise a different arrangement or positioning of the recesses in their respective engagement surface. This may help to differentiate between the left and right hand thrust washers, thereby providing a mistake proofing feature (poka-yoke).

In an alternative embodiment (not shown in the Figures), the at least one recess in the engagement surface for receiving an adhesive may be used in addition to one or more of the clips or tangs used in some prior art flanged bearings discussed above. This may provide a flanged bearing having additional stiffness compared to a flanged bearing having only an adhesive coupling or only having the one or more clips or tangs. Alternatively, it may enable the clips or tangs to have lower tolerances (i.e. a looser fit) than those that are used in some prior art flanged bearings which may have a number of benefits over the prior art flanged bearings having close tolerances, as described above.

A suitable process for manufacturing a flanged bearing assembly according to preferred embodiments of the present invention may comprise the following steps:-
(i) providing a pair of sliding element components or thrust washers according to the first or second aspect of the present invention;
(ii) providing a bearing shell;
(iii) applying an adhesive to the, or each, recess in the engagement surface of each sliding element component or each thrust washer or applying an adhesive to the corresponding engagement surfaces on the bearing shell in a position corresponding to the, or each, recess in the engagement surface of each sliding element component or each thrust washer;
(iv) bringing the sliding element components or thrust washers into engagement with the bearing shell along the respective engagement surfaces; and
(v) maintaining the sliding element components or thrust washers in contact with the bearing shell along the respective engagement surfaces while the adhesive is at least partially cured so as to form a self-supporting flanged bearing assembly.

It will be appreciated that these steps need not necessarily be carried out in this order and may be carried out in a different order.

Step (i) and/or step (ii) of the method may involve several steps, including cutting or stamping sliding element component blanks from a sheet of raw material, forming of the sliding element component and applying one or more layers of material on the formed or unformed blank, for example an intermediate layer and/or a polymer-based running layer.

Additional method steps may be included as required. For example, prior to step (iii), it may be beneficial to wash and/or degrease some or all of the sliding element components, or perhaps only the portions of those components that will come into contact with the adhesive. Additional treatment of the surfaces, e.g. by grit blasting or shot peening is unlikely to be required and carries the risk of introducing impurities.

Step (v) may require the use of one or more appropriately shaped jigs and / or clamps for each assembly while the adhesive is at least partially cured so that the assembled flanged bearing becomes self-supporting. Providing a separate jig or clamp arrangement for each bearing assembly on the production line may help to keep the manufacturing lead time to a minimum.

## Claims

1. A sliding element component for sliding engagement with a rotatable component, the sliding element component being coupleable to a further sliding element component by an adhesive, the sliding element component comprising an engagement surface for engagement with a corresponding engagement surface on the further sliding element component, the engagement surface of the sliding element component comprising at least one recess for receiving an adhesive,
**characterized in that**
the adhesive has an elongation at break or elongation capacity of between about 100 percent and about 500 percent.

2. A sliding element component according to Claim 1 for sliding engagement with a rotatable shaft.

3. A sliding element component according to Claim 1 or Claim 2, wherein a depth of the at least one recess in the engagement surface of the sliding element component is between about 0.1mm and about 1mm.

4. A sliding element component according to Claim 3, wherein a depth of the at least one recess in the engagement surface of the sliding element component is about 0.5mm.

5. A sliding element component according to any of the preceding Claims, wherein a length of the at least one recess in the engagement surface of the sliding element component is between about 3mm and about 5mm.

6. A sliding element component according to any of the preceding Claims, comprising between 1 and 12 recesses in the engagement surface of the sliding element component.

7. A sliding element component according to any of the preceding Claims, comprising between 3 and 8 recesses in the engagement surface of the sliding element component.

8. A sliding element component according to Claim 6 or 7, wherein the recesses are evenly spaced around the engagement surface of the sliding element component.

9. A sliding element component according to any of the preceding Claims, wherein the adhesive is resistant to lubricants, particularly engine oils, and engine operation temperatures in the region of about 90 degrees C to about 150 degrees C.

10. A sliding element component according to any of the preceding Claims, wherein the adhesive is viscous and has a viscosity of greater than 3500 mPas/thix and is substantially self-supporting.

11. A thrust washer formed as a sliding component according to any of the preceding Claims, wherein the at least one recess in the engagement surface of the thrust washer is proximate an inner edge defining an inner diameter of the thrust washer.

12. A flanged bearing assembly comprising a pair of sliding element components or thrust washers of any of the preceding Claims and a bearing shell, each sliding element component or thrust washer coupled to the bearing shell by an adhesive so as to form a self-supporting flanged bearing assembly.

13. A flanged bearing assembly according to Claim 12 wherein the adhesive is applied to the, or each, recess in the engagement surface of each sliding element component or each thrust washer and / or the adhesive is applied to the corresponding engagement surfaces on the bearing shell in a position corresponding to the, or each, recess in the engagement surface of each sliding element component or each thrust washer.

14. A flanged bearing according to Claim 12 or claim 13, wherein the adhesive is curable in two stages.

15. An engine comprising a sliding element component according to any of Claims 1 to 10 or a thrust washer according to Claim 11 or a flanged bearing according to any of Claims 12 to 14.

16. A method of assembling a flanged bearing assembly comprising the steps of:
(i) providing a pair of sliding element components according to any of claims 1 to 10 or thrust washers according to claim 11;
(ii) providing a bearing shell;
(iii) applying an adhesive to the, or each, recess in the engagement surface of each sliding element component or each thrust washer or applying an adhesive to the corresponding engagement surfaces on the bearing shell in a position corresponding to the, or each, recess in the engagement surface of each sliding element component or each thrust washer;
(iv) bringing the sliding element components or thrust washers into engagement with the bearing shell along the respective engagement surfaces; and
(v) maintaining the sliding element components or thrust washers in contact with the bearing shell along the respective engagement surfaces while the adhesive is at least partially cured so as to form a self-supporting flanged bearing assembly.

## Patentansprüche

1. Gleitelementkomponente für Gleiteingriff mit einer drehbaren Komponente, wobei die Gleitelementkomponente an eine weitere Gleitelementkomponente durch einen Klebstoff kuppelbar ist, wobei die Gleitelementkomponente eine Eingriffsfläche für Eingriff mit einer entsprechenden Eingriffsfläche an der weiteren Gleitelementkomponente umfasst, wobei die Eingriffsfläche der Gleitelementkomponente mindestens eine Tasche zur Aufnahme eines Klebstoffs umfasst,
**dadurch gekennzeichnet, dass**
der Klebstoff eine Bruchdehnung oder Dehnungskapazität zwischen etwa 100 Prozent und etwa 500 Prozent aufweist.

2. Gleitelementkomponente nach Anspruch 1 für Gleiteingriff mit einer Drehwelle.

3. Gleitelementkomponente nach Anspruch 1 oder Anspruch 2, wobei eine Tiefe der mindestens einen Tasche in der Eingriffsfläche der Gleitelementkomponente zwischen etwa 0,1 mm und etwa 1 mm ist.

4. Gleitelementkomponente nach Anspruch 3, wobei eine Tiefe der mindestens einen Tasche in der Eingriffsfläche der Gleitelementkomponente etwa 0,5 mm ist.

5. Gleitelementkomponente nach einem der vorstehenden Ansprüche, wobei eine Länge der mindestens einen Tasche in der Eingriffsfläche der Gleitelementkomponente zwischen etwa 3 mm und etwa 5 mm ist.

6. Gleitelementkomponente nach einem der vorstehenden Ansprüche, umfassend zwischen 1 und 12 Taschen in der Eingriffsfläche der Gleitelementkomponente.

7. Gleitelementkomponente nach einem der vorstehenden Ansprüche, umfassend zwischen 3 und 8 Taschen in der Eingriffsfläche der Gleitelementkomponente.

8. Gleitelementkomponente nach Anspruch 6 oder 7, wobei die Taschen gleichmäßig um die Eingriffsfläche der Gleitelementkomponente beabstandet sind.

9. Gleitelementkomponente nach einem der vorstehenden Ansprüche, wobei der Klebstoff gegenüber Schmiermitteln, insbesondere Motorölen, und Motorbetriebstemperaturen im Bereich von etwa 90 Grad C bis etwa 150 Grad C beständig ist.

10. Gleitelementkomponente nach einem der vorstehenden Ansprüche, wobei der Klebstoff viskos ist und eine Viskosität größer als 3500 mPas/thix aufweist und im Wesentlichen selbsttragend ist.

11. Anlaufscheibe, die als eine Gleitkomponente nach einem der vorstehenden Ansprüche gebildet ist, wobei die mindestens eine Tasche in der Eingriffsfläche der Anlaufscheibe nahe einem Innenrand ist, der einen Innendurchmesser der Anlaufscheibe definiert.

12. Mit Flansch versehene Lageranordnung, umfassend ein Paar von Gleitelementkomponenten oder Anlaufscheiben nach einem der vorstehenden Ansprüche und eine Lagerschale, wobei jede Gleitelementkomponente oder Anlaufscheibe durch einen Klebstoff an die Lagerschale gekuppelt ist, sodass eine mit selbsttragendem Flansch versehende Lageranordnung gebildet wird.

13. Mit Flansch versehene Lageranordnung nach Anspruch 12, wobei der Klebstoff auf die oder jede Tasche in der Eingriffsfläche jeder Gleitelementkomponente oder jeder Anlaufscheibe aufgetragen wird und/oder der Klebstoff auf die entsprechenden Eingriffsflächen auf der Lagerschale in einer Position entsprechend der oder jeder Tasche in der Eingriffsfläche jeder Gleitelementkomponente oder jeder Anlaufscheibe aufgetragen wird.

14. Mit Flansch versehenes Lager nach Anspruch 12 oder Anspruch 13, wobei der Klebstoff in zwei Stufen härtbar ist.

15. Motor, umfassend eine Gleitelementkomponente nach einem der Ansprüche 1 bis 10 oder eine Anlaufscheibe nach Anspruch 11 oder ein mit Flansch versehenes Lager nach einem der Ansprüche 12 bis 14.

16. Verfahren zum Zusammenbauen einer mit Flansch versehenen Lageranordnung, umfassend die Schritte zum:
(i) Bereitstellen eines Paars von Gleitelementkomponenten nach einem der Ansprüche 1 bis 10 oder von Anlaufscheiben nach Anspruch 11;
(ii) Bereitstellen einer Lagerschale;
(iii) Aufbringen eines Klebstoffs auf die oder jede Tasche in der Eingriffsfläche jeder Gleitelementkomponente oder jeder Anlaufscheibe oder Aufbringen eines Klebstoffs auf die entsprechenden Eingriffsflächen an der Lagerschale in einer Position entsprechend der oder jeder Tasche in der Eingriffsfläche jeder Gleitelementkomponente oder jeder Anlaufscheibe;
(iv) In-Eingriff-Bringen der Gleitelementkomponenten oder Anlaufscheiben mit der Lagerschale entlang der entsprechenden Eingriffsflächen; und
(v) Halten der Gleitelementkomponenten oder Anlaufscheiben in Kontakt mit der Lagerschale entlang der entsprechenden Eingriffsflächen, während der Klebstoff mindestens teilweise gehärtet ist, um so eine mit selbsttragendem Flansch versehene Lageranordnung zu bilden.

## Revendications

1. Composant d'élément coulissant pour s'encliqueter de manière coulissante avec un composant rotatif, le composant d'élément coulissant étant accouplé à un autre composant d'élément coulissant par un adhésif, le composant d'élément coulissant comprenant une surface d'encliquetage destinée à s'encliqueter avec une surface d'encliquetage correspondante sur l'autre composant d'élément coulissant, la surface d'encliquetage du composant d'élément coulissant comprenant au moins une cavité pour recevoir un adhésif,
**caractérisé en ce que**
l'adhésif présente un allongement à la rupture ou une capacité d'allongement compris entre environ 100 pour cent et environ 500 pour cent.

2. Composant d'élément coulissant selon la revendication 1 destiné à s'encliqueter de manière coulissante avec un arbre rotatif.

3. Composant d'élément coulissant selon la revendication 1 ou la revendication 2, dans lequel une profondeur du au moins une cavité dans la surface d'encliquetage du composant d'élément coulissant est entre environ 0,1 mm et environ 1 mm.

4. Composant d'élément coulissant selon la revendication 3, dans lequel une profondeur de la au moins une cavité dans la surface d'encliquetage du composant d'élément coulissant est d'environ 0,5 mm.

5. Composant d'élément coulissant selon l'une quelconque des revendications précédentes, dans lequel une longueur de la au moins une cavité dans la surface d'encliquetage du composant d'élément coulissant est entre environ 3 mm et environ 5mm.

6. Composant d'élément coulissant selon l'une quelconque des revendications précédentes, comprenant entre 1 et 12 cavités dans la surface d'encliquetage du composant d'élément coulissant.

7. Composant d'élément coulissant selon l'une quelconque des revendications précédentes, comprenant entre 3 et 8 cavités dans la surface d'encliquetage du composant d'élément coulissant.

8. Composant d'élément coulissant selon la revendication 6 ou 7, dans lequel les cavités sont régulièrement espacées autour de la surface d'encliquetage du composant d'élément coulissant.

9. Composant d'élément coulissant selon l'une quelconque des revendications précédentes, dans lequel l'adhésif est résistant aux lubrifiants, en particulier aux huiles moteur, et à des températures de fonctionnement de moteur dans la région d'environ 90 degrés C à environ 150 degrés C.

10. Composant d'élément coulissant selon l'une quelconque des revendications précédentes, dans lequel l'adhésif est visqueux et présente une viscosité supérieure à 3 500 mPas/thix et est sensiblement autoporteur.

11. Rondelle de butée formée sous forme d'un composant coulissant selon l'une quelconque des revendications précédentes, dans laquelle le au moins une cavité dans la surface d'encliquetage de la rondelle de butée est proche d'un bord interne définissant un diamètre interne de la rondelle de butée.

12. Ensemble palier à bride comprenant une paire de composants d'élément coulissant ou de rondelles de butée selon l'une quelconque des revendications précédentes et un coussinet de palier, chaque composant d'élément coulissant ou rondelle de butée étant accouplé au coussinet de palier par un adhésif de façon à former un ensemble palier à bride autoporteur.

13. Ensemble palier à bride selon la revendication 12, dans lequel l'adhésif est appliqué à la cavité ou à chaque cavité dans la surface d'encliquetage de chaque composant d'élément coulissant ou de chaque rondelle de butée et/ou l'adhésif est appliqué aux surfaces d'encliquetage correspondantes sur le coussinet de palier dans une position correspondant à la cavité ou à chaque cavité dans la surface d'encliquetage de chaque composant d'élément coulissant ou de chaque rondelle de butée.

14. Palier à bride selon la revendication 12 ou la revendication 13, dans lequel l'adhésif est durcissable en deux étapes.

15. Moteur comprenant un composant d'élément coulissant selon l'une quelconque des revendications 1 à 10 ou une rondelle de butée selon la revendication 11 ou un palier à bride selon l'une quelconque des revendications 12 à 14.

16. Procédé d'assemblage d'un ensemble palier à bride comprenant les étapes de :
(i) fourniture d'une paire de composants d'élément coulissant selon l'une quelconque des revendications 1 à 10 ou de rondelles de butée selon la revendication 11 ;
(ii) fourniture d'un coussinet de palier ;
(iii) application d'un adhésif sur la cavité ou sur chaque cavité dans la surface d'encliquetage de chaque composant d'élément coulissant ou de chaque rondelle de butée ou application d'un adhésif aux surfaces d'encliquetage correspondantes sur le coussinet de palier dans une position correspondant à la cavité ou à chaque cavité dans la surface d'encliquetage de chaque composant d'élément coulissant ou de chaque rondelle de butée ;
(iv) encliquetage des composants d'élément coulissant ou des rondelles de butée avec le coussinet de palier le long des surfaces d'encliquetage respectives ; et
(v) maintien des composants d'élément coulissant ou des rondelles de butée en contact avec le coussinet de palier le long des surfaces d'encliquetage respectives pendant que l'adhésif est au moins en partie durci de façon à former un ensemble palier à bride autoporteur.
